# EUROPÄISCHE PATENTSCHRIFT

(11) **EP 2 810 759 B1**
(45) Veröffentlichungstag und Bekanntmachung des Hinweises auf die Patenterteilung: **07.10.2015**
(21) Anmeldenummer: 14171438.6
(22) Anmeldetag: 06.06.2014
(51) Int. Cl.: B29C 33/64

(54) **Trennmittel und dessen Verwendung für die Herstellung von Polyurethan-Formkörpern**
Separating agent and its use for the manufacture of polyurethane moulded bodies
Moyen de séparation et son utilisation pour la fabrication de corps de formage en polyuréthane

(30) Priorität: 06.06.2013 DE 102013009636
(43) Veröffentlichungstag der Anmeldung: 10.12.2014
(73) Patentinhaber: Acmos Chemie KG, 28199 Bremen (DE)
(72) Erfinder: Schneider, Valentina, 28259 Bremen (DE); Klyszcz-Nasko, Holger, 28816 Stuhr (DE); Prochnow, Peter, 28199 Bremen (DE)
(74) Vertreter: Scholz, Volker

(56) Entgegenhaltungen:
- EP-A1- 1 719 597
- WO-A1-2010/081462
- WO-A1-2012/007242

## Beschreibung

Die vorliegende Erfindung betrifft die Verwendung eines Trennmittels zur Herstellung von Polyurethan-Formkörpern.

Trennmittel werden überall dort eingesetzt, wo die Adhäsion von Formstoffen gegenüber den Formen, die beispielsweise aus thermisch stark leitfähigen Werkstoffen, wie Metallen, hergestellt sind, so groß ist, dass eine zerstörungsfreie Entnahme des Formteils aus einer Geometrie gebenden Form ohne solche Trennmittel nicht möglich ist. Beispielsweise benötigt man bei der Entformung von Polyurethan-Formkörpern Trennmittel, die auf die mit Polyurethanen und/oder der Polyurethan-Reaktionsmischung in Berührung kommenden Formwandungen aufgebracht werden. Dabei können die für die Entformung notwendigen Trennmittel aus Dispersionen und Lösungen von Wachsen, Seifen, Ölen und Silikonen (Polysiloxanen) in Trägermedien, wie z.B. Lösungsmitteln (Kohlenwasserstoffen) oder Wasser, aufgebaut sein. Die Lösungsmittel verdampfen nach Aufbringen des Trennmittels von der Formenoberfläche, und ein dünner Trennfilm bleibt zurück, der die einfache Entnahme des Formteils ermöglicht.

Moderne Trennmittel, z.B. für Polyurethan, haben neben der Aufgabe der Trennwirkung weitere Funktionen, die die Oberflächen der Formteile betreffen. Bei entsprechender Auswahl der Rohstoffe können Zelligkeit, Haptik, Farbe, Glanz und Verkleb- und Lackierbarkeit des Formkörpers beeinflusst werden. Beispielsweise dienen offene Formbauteiloberflächen bei Schallisolationsbauteilen dazu, Schall zu absorbieren. Bei Autositzkissen aus Polyurethan sind glatte Oberflächen, d.h. eine glatte Haptik, sehr hilfreich beim Beziehen der Sitze mit Stoffen.

Als trennaktive Substanzen werden am häufigsten Wachse, Öle und vor allen Dingen Silikonverbindungen allein oder in Kombination eingesetzt. Insbesondere die Silikone zeigen eine hervorragende Trennwirkung und eine sehr geringe Neigung zum Formenaufbau. Nachteilig für diese Verbindungen sind das Auftreten von Schaumstörungen bis hin zum großflächigen Schaumkollaps, sowie die Tendenz einen zu hohen Oberflächenglanz und eine zu hohe Fettigkeit der Oberfläche der entformten Teile zu erzeugen.

Als Haptik, bzw. haptische Wahrnehmung, soll hierbei das "Begreifen" im Wortsinne, also die Wahrnehmung durch Berühren verstanden werden. Erfasste Objekteigenschaften sind hierbei insbesondere die Oberflächentextur und die Nachgiebigkeit des Objekts.

In bekannten Trennmittelsystemen werden heute oberflächenaktive Substanzen vom Typ der Silikonpolyglykolether eingesetzt, um die Zelligkeit der Oberfläche der Schaumteile zu regulieren und Oberflächendefekte zu reduzieren, wie es beispielsweise aus der US 4,936,917 bekannt ist.

Aus der EP 0 207 192 sind Organopolysiloxane als interne Trennmittel für isocyanatgebundene lignocellulosehaltige Formkörper bekannt. Die Organopolysiloxane weisen polare Reste auf, die aus Polyoxyalkylenresten, Aminresten sowie Resten mit Carboxylgruppen, Sulfonsäuregruppen oder deren Salze und quaternären Ammoniumresten ausgewählt werden. DE 10 2007 027 027 und DE 10 2010 001 531 postulieren den Einsatz von Organopolysiloxanen mit quaternären Ammoniumresten als Trennmittel.

Aufgabe der vorliegenden Erfindung ist es, eine Verwendung eines Trennmittels für die Herstellung von Polyurethan-Formkörpern bereitzustellen, die die Nachteile des Stands der Technik überwindet, wobei das Trennmittel insbesondere eine erhöhte Trennwirkung zeigt, welches einen reduzierten Trennmittelaufbau erzeugt, eine dem Kundenwunsch entsprechende und einstellbare Haptik des Formteils hinterlässt sowie keine Schaumstörungen im oder auf der Oberfläche des entformten Formteils erzeugt. Auch soll der Arbeitsschutz beim Versprühen des Trennmittels gewährleistet werden.

Diese Aufgabe wird gelöst durch die Verwendung eines Trennmittels zur Herstellung von Polyurethan-Formkörper, wobei das Trennmittel für die Herstellung von Polyurethan-Formkörpern umfasst: i) zumindest ein Trägermedium ausgewählt aus Wasser und/oder organischem Lösungsmittel, ii) zumindest ein Polysiloxan, das zumindest eine Aminogruppe oder Amidogruppe und zumindest eine Polyalkylenoxid-Gruppe aufweist, iii) vorzugsweise zumindest ein bei Raumtemperatur festes Polysiloxan, vorzugsweise ausgewählt aus der Gruppe der Silikonharze und/oder Silikonwachse, und iv) zumindest eine trennaktive Substanz ausgewählt aus der Gruppe der Wachse, Polysiloxane ohne Amino- oder Amidogruppe und Polyalkylenoxid-Gruppe, Seifen und Öle, vorzugsweise ausgewählt aus der Gruppe der reaktiven Polysiloxane ohne Amino- oder Amidogruppe, reaktiven Seifen oder reaktiven Öle.

Bei dem bei Raumtemperatur (20-25°C) festen Polysiloxan gemäß iii) handelt es sich bevorzugt um ein festes Polysiloxan ohne zumindest eine Amino- oder Amidogruppe und zumindest eine Polyalkylenoxid-Gruppe.

Auch ist bevorzugt, dass die reaktiven Polysiloxane ohne Amino- oder Amidogruppe Silikonöle mit Hydroxyfunktionen sind. Vorzugsweise werden durch die Anwesenheit der Hydroxyfunktionen weitere chemische Reaktionen ermöglicht. Neben OH-terminierten Polysiloxanen sind auch andere zur weiteren Reaktion befähigte Polysiloxane als erfindungsgemäß bevorzugt umfasst.

Ebenso bevorzugt vorgesehen ist, dass die reaktiven Seifen zur Esterbildung befähigte Carboxylat-Anionen enthalten.

Ebenso ist bevorzugt, dass die reaktiven Öle mit Doppelbindungen versehene Polybutadiene sind. Hierbei ist erfindungsgemäß vorgesehen, dass mit Hilfe besagter reaktiver Doppelbindungen die reaktiven Öle zu weiteren Reaktionen befähigt sind.

Unter reaktiv, bzw. chemisch reaktiv, ist hierbei eine chemische Funktionalität im trennaktiven Molekül zu verstehen, welche unter normalen Bedingungen, z.B. bei Raumtemperatur und/oder unter Anwendungsbedingungen, mit einem Reaktionspartner umgesetzt werden könnte.

Die im vorangehenden genannten bevorzugten Ausführungsformen sollen hierbei als beispielhaft und nicht abschließend verstanden werden.

Es können dabei auch in einem Molekül mehrere verschiedene Amino- oder Amidogruppen vorliegen und/oder Aminogruppen gleichzeitig mit Amidogruppen vorhanden sein.

Als Wachs soll hierbei eine unter die technologische Sammelbezeichnung fallende Verbindung aus der Reihe natürlich oder künstlich gewonnener Stoffe, die in der Regel bei 20°C knetbar, fest bis brüchig hart, grob- bis feinkristalling, durchscheinend bis opak, jedoch nicht glasartig, über 40°C ohne Zersetzung schmelzend, schon wenig oberhalb des Schmelzpunktes verhältnismäßig niedrigviskos und nicht fadenziehend sind und die in ihrer Konsistenz und Löslichkeit stark temperaturabhängig, sowie unter leichten Druck polierbar sind, verstanden werden.

Ferner sind die Amino- oder Amidogruppe bevorzugt über eine Alkylengruppe, Alkylenoxid-Gruppe, Polyalkylenoxid-Gruppe, Epoxy-haltige Gruppe, Keto-Gruppen oder Carboxy-Gruppe oder Kombinationen derselben an einer Silikonkette angebunden.

Weiter ist möglich, dass eine Alkylengruppe, Alkylenoxid-Gruppe, Polyalkylenoxid-Gruppe, Epoxy-haltige Gruppe, Keto-Gruppe oder Carboxy-Gruppe oder Kombinationen derselben an der Amino- oder Amidogruppe direkt oder über einen Spacer angebunden ist bzw. sind. Als mögliche Spacer zur Anfügung an die Hauptkette sind insbesondere Alkylen- und Alkylenoxygruppen einsetzbar. Auch ist es erfindungsgemäß möglich, dass mehr als eine Amino- oder Amidogruppe an einer organischen Gruppe angefügt ist.

Im Trennmittel können Polysiloxane mit Amino- oder Amidogruppen eingesetzt werden, die in den Seitenketten des Polysiloxans eine Amino- oder Amidogruppe enthalten (Kammstruktur). Darüber hinaus können Amino- oder Amidogruppen auch alleine, oder zusätzlich, in einer alpha-omega-endständigen Position vorliegen.

Die Polyalkylenoxid-Gruppe kann an einem anderen Silizium-Atom als die zumindest eine Amino- oder Amidogruppe vorliegen. Denkbar ist jedoch auch, dass eine Polyalkylenoxid-Gruppe als eine organische Gruppe dient, um die Amino- oder Amidogruppe an einem Silizium-Atom anzufügen. Auch ist es denkbar, dass die Amino- oder Amidogruppe zunächst über eine beliebige organische Gruppe am Silizium-Atom angebunden ist und die Polyalkylenoxid-Gruppe als einer der Reste am Stickstoff der Amino- oder Amidogruppe angefügt ist.

Im Rahmen der vorliegenden Erfindung ist die Bezeichnung "Aminogruppe" nicht nur so zu verstehen, dass sie primäre, sekundäre und tertiäre Aminogruppen einschließt, sondern ebenfalls so, dass die Aminogruppe Teil einer Amid-Funktionalität sein kann und insbesondere auch Harnstoff-Funktionalitäten umfasst. Es können Aminogruppen gleichzeitig mit Amidogruppen im Molekül auftreten. Die Polyalkylenoxid-Gruppe kann auch in Form von alternierenden Monomereinheiten mit den Siloxaneinheiten in der Hauptkette angeordnet sein.

Die organische Gruppe, die die Amino- oder Amidogruppe mit dem Silizium verbindet, kann ggf. weitere funktionelle Gruppen tragen, wie beispielsweise Hydroxy oder Halogen

Alle in den Formeln in dieser Anmeldung gegebenen Definitionen für bestimmte Reste sind ausdrücklich so zu verstehen, dass sie sich ausschließlich auf die Definition der jeweiligen Reste in der unmittelbar zuvor aufgeführten Formel beziehen.

Besonders bevorzugt ist, dass die Aminogruppe die Formel N(R1)(R2)(R3) aufweist, wobei jedes R1-R3 unabhängig voneinander ausgewählt ist aus H, C1-C20-Alkyl, C1-C20-Alkenyl, C1-C10-Alkoxy und Polyalkoxy, wobei insbesondere die Alkyl- oder Alkenylreste bevorzugt weitere funktionelle Gruppen, wie beispielsweise Hydroxylgruppen, Ketogruppen und/oder Carboxygruppen, aufweisen können, wobei sekundäre und tertiäre Aminogruppen bevorzugt sind.

Insbesondere ist auch bevorzugt, dass die zumindest eine Aminogruppe und/oder Amidogruppe und die zumindest eine Polyalkylenoxid-Gruppe an verschiedenen Silizium-Atomen des Polysiloxans angeordnet sind.

Erfindungsgemäß wird auch bevorzugt vorgeschlagen, dass die zumindest eine Polyalkylenoxid-Gruppe über eine weitere organische Gruppe an einem Silizium-Atom angebunden ist, wobei die weitere organische Gruppe bevorzugt eine Alkylengruppe ist.

Copolymere, in denen die Polysiloxane eine Aminogruppe und Polyalkylenoxid-Gruppe enthalten, sind besonders bevorzugt aufgebaut aus alternierenden Einheiten der Formel (X(CₐH₂ₐO)_{b}R²{SiO(R¹)₂}_{c}Si(R¹)₂R²(OCₐH₂ₐ)_{b}X) und der Formel (YO(CₐH₂ₐO)_{d}Y), worin jedes R¹ unabhängig eine C₁- bis C₄-Alkylgruppe ist, R² ein zweiwertiger organischer Rest ist, X und Y zweiwertige organische Gruppen sind, ausgewählt aus der Gruppe bestehend aus sekundären und tertiären Aminen und ringgeöffneten Epoxiden, so dass, wenn X ein ringgeöffnetes Epoxid ist, Y ein Amin ist und umgekehrt, a 2 bis 4 ist, jedes Vorkommen von b 0 bis 100 ist, d 0 bis 100 ist, (b+d) 1 bis 100 ist und c 1 bis 500 ist. Besonders bevorzugt ist dabei, dass die sekundären und tertiären Amine der Struktur -R⁴N(R³)(R⁴)_{g}- entsprechen, worin R³ eine Alkylgruppe mit 1 bis 4 Kohlenstoffatomen oder Wasserstoff ist, R⁴ eine Alkylen-, cycloaliphatische Alkylen- oder eine Aralkylengruppe ist, welche Heteroatome einschließen können, und g 0 oder 1 sein kann. Solche Copolymere sind aus der US 5,807,956 bekannt.

Bevorzugt ist, dass die weitere trennaktive Substanz ausgewählt ist aus flüssigen, festen, natürlichen und synthetischen Wachsen, optional behandelt, chemisch modifiziert oder verseift, Estern von Carbonsäuren mit Alkoholen oder Fettalkoholen, Metallseifen, Ölen oder sonstigen flüssigen Kohlenwasserstoffen oder Silikonen ohne quaternären Stickstoffrest.

Im Trennmittel liegt das Polysiloxan, das zumindest eine Amino- oder Amidogruppe und zumindest eine Polyalkylenoxid-Gruppe aufweist, in einer Menge von 0,1-20 Gew.-%, bevorzugt 0,5-20 Gew.-% der Gesamtmenge des Trennmittels vor.

Ferner bevorzugt ist die Verwendung eines Trennmittels zur Herstellung von Polyurethan-Formkörpern als externes Trennmittel.

Überraschenderweise wurde gefunden, dass das Trennmittel die Trennwirkung verbessert und die Oberfläche des Formkörpers hinsichtlich der Haptik positiv beeinflusst, ohne Schaumstörungen zu erzeugen, sowie gleichzeitig wenig Aufbau zeigt.

Die Trennmittel zeichnen sich ferner dadurch aus, dass sie eine gute Löslichkeit im frischen, flüssigen Polyurethanschaum besitzen und sich in der Grenzfläche des Trennmittels und des Schaums bevorzugt anlagern, ohne Oberflächenstörungen zu verursachen.

Für das Trennmittel ist die Verwendung von Wasser als Trägermedium bevorzugt, da Wasser aus Umweltschutzgründen das ökologisch geringste Gefährdungspotential besitzt. Die Mitverwendung von organischen Lösungsmitteln, insbesondere flüchtigen organischen Lösungsmitteln, wie Alkoholen und aliphatischen Kohlenwasserstoffen, ist denkbar, da diese Verbindungen durchaus zur besseren Verarbeitung des Trennmittels beitragen. Jedoch fallen unter das Trennmittel auch solche, die auf den Einsatz von Wasser als Trägermedium gänzlich verzichten und nur auf ein oder mehrere organische Lösungsmittel zurückgreifen.

In einer besonders bevorzugten Ausführungsform enthält das Trennmittel weitere Komponenten, die ausgewählt sind aus der Gruppe bestehend aus Emulgator(en), Katalysator(en), Schaumstabilisator(en), Viskositätsmodifizierer(n), Konservierungstoff(en) sowie ggf. weiteren Hilfs- und Zusatzstoffen. Besonders bevorzugt umfasst das Trennmittel in Gewichtsprozent, bezogen auf das Gesamtgewicht des Trennmittels,
a) 0,5-40 Gew.-% einer weiteren trennaktiven Substanz ausgewählt aus der Gruppe der Seifen, Öle, Wachse und Silikone ohne Amino- oder Amidogruppe
b) 0,1-20 Gew.-%, bevorzugt 0,5-20 Gew.-%, Polysiloxan mit Amino- oder Amidogruppe und Polyalkylenoxid-Gruppe
c) 0,5-20 Gew.-% Hilfsstoffe und Zusatzstoffe
d) Ad 100% Trägermedium.

Besonders bevorzugt umfasst das Trennmittel in Gewichtsprozent, bezogen auf das Gesamtgewicht des Trennmittels,
a) 0,5-40 Gew.-% zumindest einer trennaktiven Substanz ausgewählt aus der Gruppe der Seifen, Öle, Wachse und Silikone ohne Amino- oder Amidogruppe
b) 0,1-20 Gew.-%, bevorzugt 0,5-20 Gew.-%, Polysiloxan mit Amino- oder Amidogruppe und Polyalkylenoxid-Gruppe
c) 0,1-10 Gew.-% Emulgator
d) 0,1-5 Gew.-% Katalysator
e) 0,1-5 Gew.-% Schaumstabilisator
f) 0,1-5 Gew.-% Viskositätsmodifizierer
g) 0,1-2 Gew.-% Konservierungsstoff, wie Bakterizide, Fungizide und Antioxidantien
h) 0,1-10 Gew.-% weitere Hilfsstoffe und/oder Zusatzstoffe
i) Ad 100 Gew.-% Wasser

Als weitere trennktive Substanzen sind insbesondere die folgenden bevorzugt:
Wachse, d.h. flüssige, feste, natürliche oder synthetische Wachse, die behandelt, chemisch modifiziert oder verseift wurden; Ester von Carbonsäuren mit Alkoholen oder Fettalkoholen; Metallseifen, wie Alkali- oder Erdalkalimetallsalze von Fettsäuren; Öle oder sonstige flüssige Kohlenwasserstoffe, wie Weissöle oder Polyalphaolefine; Silikone, wie Polydimethylsiloxan, ggf. substituiert mit Polyethern, aliphatischen, aromatischen, aminoaliphatischen Kohlenwasserstoffresten, halogenierten aliphatischen Resten und/oder amidoaliphatischen Kohlenwasserstoffreste.

Als übliche Hilfs- und Zusatzstoffe können ein oder mehrere Verbindungen ausgesucht werden aus der Gruppe der
i) Emulgatoren
   Anionische Emulgatoren, wie Alkylethercarboxylate, Alkylsulfate; nicht-ionische Emulgatoren wie ethoxylierte Fettalkohole, ethoxylierte Oxoalkohole und andere Alkoholether, Fettamine wie Dialkylamine, Fettsäurealkanolamide, Fettsäureester mit Alkoholen, wie Sorbitolester, kationische Emulgatoren, wie sauer gestellte Dialkyldimethylamine, quartäre Stickstoffverbindungen; amphothere Tenside; wobei die Tenside allesamt in Mengen von 0,1-10 Gew.-%, bevorzugt 0,5-10 Gew.-% mit verwendet werden können.
ii) Katalysatoren
   Typischerweise können solche Katalysatoren verwendet werden, die für die Polyurethanreaktion bekannt sind, beispielsweise Lewis-Säuren oder Lewis-Basen, wie tertiäre Amine;
iii) Schaumstabilisatoren
   Als Schaumstabilisatoren können die für die Polyurethanchemie üblichen und bekannten Schaumstabilisatoren verwendet werden.
iv) Viskositätsmodifizierer
   Als Viskositätsmodifizierer können beispielsweise Verdickungsmittel wie Cellulosederivate oder Xanthan eingesetzt werden.
v) Konservierungsstoffe
   Übliche Konservierungsstoffe, wie Bakterizide, Fungizide, Algizide oder Antioxidantien, können verwendet werden.
vi) Lösungsvermittler
   Hier kommen übliche organische, aliphatische und aromatische Lösungsmittel, wie Alkohole oder Glykole, in Betracht.

Weitere Merkmale und Vorteile des Trennmittels ergeben sich aus der folgenden detaillierten Beschreibung von Ausführungsbeispielen.

Dabei wurden zunächst zwei Basisrezepturen trennaktiver Substanzen ohne Aminogruppe mit quaternärem Stickstoffrest wie folgt hergestellt:

### Rezeptur I

2% Polywax 655 (Wachs), Hersteller Petrolite
98% Exxon D60 (flüchtiger Kohlenwasserstoff), Hersteller Exxon Chemicals

### Rezeptur II

2% Polywax 655 (Wachs), Hersteller Petrolite
1% Unithox 450 (Emulgator, Fettalkoholethoxylat), Hersteller Petrolite
2% Exxon D60 (flüchtiger Kohlenwasserstoff), Hersteller Exxon Chemicals
95,0% Wasser

Sofern nicht anderweitig ausgeführt, sind alle Prozentangaben in der vorliegenden Anmeldung Gewichtsprozentangaben, jeweils bezogen auf das Gesamtgewicht des hergestellten Produkts.

Zu der gemäß Rezeptur I hergestellten Dispersion (hergestellt durch Einrühren des Wachses in den Kohlenwasserstoff) wurden jeweils unten angegebene Additive (1)-(8) in den in der Tabelle gezeigten Mengen zugegeben, indem diese mit den trennaktiven Substanzen aufgeschmolzen wurden.

Die in der Rezeptur II hergestellte Emulsion wurde durch Aufschmelzen des Wachses mit dem Emulgator und anschließendem Dispergieren in heißem Wasser hergestellt. Auch zu dieser Emulsion wurden jeweils die unten angegebenen Additive (1)-(8) in den in der Tabelle gezeigten Mengen zugegeben. Wenn diese Additive als wasserlöslich beschrieben waren, wurden sie einfach in das Wasser zugegeben, oder, wenn sie als wasserunlöslich beschrieben waren, zuvor mit den trennaktiven Substanzen aufgeschmolzen.

Alle so hergestellten Trennmittel wurden bezüglich ihrer Fähigkeit zur Entformung von Polyurethanformkörpern getestet. Die hergestellten Prüfplatten wurden auf ihr Erscheinungsbild wie Optik (Homogenität und Zelligkeit) und Haptik (Touch) bewertet.

Für die durchgeführten Versuche wurde das hergestellte Trennmittel mit einer handelsüblichen Sprühpistole in eine 30 x 30 cm große Probenform, die auf etwa 60°C vorgewärmt wurde, gesprüht. Der Trennfilm wurde 2 Minuten getrocknet. Anschließend wurde die Form mit einem handelsüblich erhältlichen Kaltweich-PU-Schaum, wie er zur Herstellung von Kaltweich-Formschäumen verwendet wird, gefüllt. Hierzu wurden die beiden Schaumkomponenten entsprechend den Herstellerangaben mit einem Schnellaufrührer vermischt und in die Form gebracht. Die Form wurde verschlossen und der Schaum gemäß der Herstellerangaben gehärtet. Beispielhaft wurde hier A = Elastoflex W5515/1 und B = ISO 135/22 verwendet. Die Schaumkomponenten wurden im Verhältnis von 100:50 mit einem schnell laufenden Rührblatt vermischt und nach Eingabe in die Form bei 55-62°C ausgehärtet.

Die folgenden Additive wurden verwendet:
(1) DC-Fluid 190, Silikonpolyglykolether, Hersteller Dow Corning
(2) DC-Fluid 193, Silikonpolyglykolether, Hersteller Dow Corning
(3) DC-Fluid 198, Silikonpolyglykolether, Hersteller Dow Corning
(4) Magnasoft SRS, Silikonpolyglykolether mit Aminofunktion, Hersteller Momentive
(5) Magnasoft JSS, Silikonpolyglykolether mit Aminofunktion, Hersteller Momentive
(6) ShinEtsu X-22-3939A, Silikonpolyglykolether mit Aminofunktion, Hersteller ShinEtsu
(7) Momentive^{®} SF 1642 Silikonwachs mit C30-C45 Alkylketten
(8) Hansa^{®} ADD 3030 Silikonwachs mit C24-C54 Alkylketten

Die folgenden Tabellen zeigen die erhaltenen Ergebnisse hinsichtlich Trennwirkung, Oberfläche und Touch.

**Tabelle 1: Trennmittel basierend auf Dispersion nach Rezeptur I**

| Probe | Trennwirkung | Oberfläche | Touch |
|---|---|---|---|
| 0 (entspricht einer Probe ohne Zusatz eines der Additive (1)-(6) | O | O | O |
| 1% Additiv 1 | - | + | + |
| 1% Additiv 2 | - | O | O |
| 1% Additiv 3 | - | O | O |
| 1% Additiv 4 | + | ++ | ++ |
| 1% Additiv 5 | + | ++ | ++ |
| 1% Additiv 6 | + | ++ | ++ |
| 1% Additiv 7 | ++ | - | - |
| 1% Additiv 8 | ++ | - | - |
| 5% Additiv 4 in Isoparaffin | - | - | n.d. |
| 5% Additiv 5 in Isoparaffin | - | - | n.d. |
| 5% Additiv 6 in Isoparaffin | - | - | n.d. |
| 1% Additiv 6 1 % Additiv 7 | ++ | ++ | ++ |
| 1% Additiv 5 1% Additiv 8 | ++ | ++ | ++ |
| 1% Additiv 4 1% Additiv 7 | ++ | ++ | ++ |
| 1% Additiv 4 1% Additiv 8 | ++ | ++ | ++ |

| | | | |
|---|---|---|---|
| Trennwirkung (++): Formteil liegt lose in der Form; (+): Formteil lässt sich mit geringem Kraftaufwand entformen; (O): Formteil lässt sich zerstörungsfrei mit Kraftaufwand entformen; (-): Formteil lässt sich mit Einrissen entformen; (--): Formteil lässt sich nicht entformten. Oberfläche (++): kleinzellig, offen; (+) kleinzellig, geschlossen; (O): grobzellig, (-): Störungen Touch: (++): trocken, softartig; (+) trocken, glatt; (O): trocken strohig; (-): schmierig | | | |

**Tabelle 2: Trennmittel basierend auf einer Emulsion nach Rezeptur II**

| Probe | Trennwirkung | Oberfläche | Touch |
|---|---|---|---|
| 0 (entspricht einer Probe ohne Zusatz eines der Additive (1)-(6) | O | O | O |
| 1% Additiv 1 | - | + | + |
| 1% Additiv 2 | - | O | O |
| 1% Additiv 3 | - | O | O |
| 1% Additiv 4 | + | ++ | ++ |
| 1% Additiv 5 | + | ++ | ++ |
| 1% Additiv 6 | + | ++ | ++ |
| 1% Additiv 7 | ++ | - | - |
| 1% Additiv 8 | ++ | - | - |
| 5% Additiv 4 in Isoparaffin | - | - | n.d. |
| 5% Additiv 5 in Isoparaffin | -- | - | n.d. |
| 5% Additiv 6 in Isoparaffin | - | - | n.d. |
| 1% Additiv 6; 1% Additiv 7 | ++ | ++ | ++ |
| 1% Additiv 5; 1% Additiv 8 | ++ | ++ | ++ |
| 1% Additiv 4; 1% Additiv 7 | ++ | ++ | ++ |
| 1% Additiv 4; 1% Additiv 8 | ++ | ++ | ++ |

| | | | |
|---|---|---|---|
| Bewertung: Trennwirkung (++): Formteil liegt lose in der Form; (+): Formteil lässt sich mit geringem Kraftaufwand entformen; (O): Formteil lässt sich zerstörungsfrei mit Kraftaufwand entformen; (-): Formteil lässt sich mit Einrissen entformen; (--): Formteil lässt sich nicht entformen. Oberfläche: (++): kleinzellig, offen; (+) kleinzellig, geschlossen; (O): grobzellig, (-): Störungen Touch: (++): trocken softartig; (+): trocken, glatt; (O): trocken strohig; (-): schmierig | | | |

Die Ergebnisse der Versuche belegen eindeutig, dass die verwendeten Silikonverbindungen, die zumindest eine Amino- oder Amidgruppe und zumindest eine Polyalkylenoxid-Gruppe aufweisen, allein keinerlei Trennwirkung besitzen und auch die Oberfläche der Schaumteile nicht beeinflussen. Den positiven Einfluss auf die Oberfläche und die Trennwirkung erzielt man erst, wenn besagte Verbindungen in Kombination mit trennaktiven Substanzen wie Wachsen kombiniert werden. In diesem Fall wird die Trennwirkung verbessert, die Oberflächen der gefertigten Teile erscheinen gleichmäßig und die Haptik wird als weich empfunden. Einen synergistischen Effekt erzielt man, wenn die Silikonverbindungen, die Amino- oder Amidgruppe und Polyalkylenoxid-Gruppe aufweisen, mit alkylierten, festen Silikonen, den Silikonwachsen, kombiniert werden. In diesem Fall werden Bauteile erzeugt, die hinsichtlich Oberfläche, Haptik und Trennwirkung außerordentlich gute Ergebnisse erzielen.

Letzteres führt dazu, dass sich mit den Beispielrezepturen gefertigte Teile ohne die nachträgliche Verwendung von Beziehhilfen wie ACMOS 23-5008 beziehen und verbauen lassen. Normalerweise wird für diesen Prozess des Beziehens ein ölhaltiges Gleitmittel verwendet. Auf diesen Prozessschritt kann verzichtet werden.

Die in der vorstehenden Beschreibung und in den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Verwendung eines Trennmittels zur Herstellung von Polyurethan-Formkörpern, wobei das Trennmittel für die Herstellung von Polyurethan-Formkörpern umfasst:
i) zumindest ein Trägermedium ausgewählt aus Wasser und/oder organischem Lösungsmittel,
ii) zumindest ein Polysiloxan, das zumindest eine Amino- oder Amidogruppe und zumindest eine Polyalkylenoxid-Gruppe aufweist,
iii) vorzugsweise zumindest ein bei Raumtemperatur festes Polysiloxan, vorzugsweise ausgewählt aus der Gruppe der Silikonharze und/oder Silikonwachse, und
iv) zumindest eine trennaktive Substanz ausgewählt aus der Gruppe der Wachse, Polysiloxane ohne Amino- oder Amidogruppe und Polyalkylenoxid-Gruppe, Seifen und Öle, vorzugsweise ausgewählt aus der Gruppe der reaktiven Polysiloxane ohne zumindest eine Amino- oder Amidogruppe und zumindest eine Polyalkylenoxid-Gruppe, reaktiven Seifen oder reaktiven Öle.

2. Verwendung eines Trennmittels zur Herstellung von Polyurethan-Formkörpern nach Anspruch 1, **dadurch gekennzeichnet, dass** die Amino- oder Amidogruppe über eine organische Gruppe an einem Siliziumatom angebunden ist, wobei die organische Gruppe bevorzugt eine Alkylengruppe, Alkylenoxid-Gruppe, Polyalkylenoxid-Gruppe, Epoxy-haltige Gruppe, Keto-Gruppe, Carboxy-Gruppe oder Kombinationen derselben enthält.

3. Verwendung eines Trennmittels zur Herstellung von Polyurethan-Formkörpern nach Anspruch 1 oder 2, **dadurch gekennzeichnet, dass** die Aminogruppe die Formel - N(R¹)(R²)(R³) aufweist, wobei jedes R¹-R³ unabhängig voneinander ausgewählt ist aus H, C₁-C₂₀-Alkyl, C₁-C₂₀-Alkenyl, C₁-C₁₀-Alkoxy und Polyalkoxy, wobei insbesondere die Alkyl- oder Alkenylreste bevorzugt weitere funktionelle Gruppen, wie beispielsweise Hydroxylgruppen, Ketogruppen und/oder Carboxygruppen, aufweisen können, wobei sekundäre und tertiäre Aminogruppen bevorzugt sind.

4. Verwendung eines Trennmittels zur Herstellung von Polyurethan-Formkörpern nach einem der vorangehenden Ansprüche, **dadurch gekennzeichnet, dass** die zumindest eine Amino- oder Amidogruppe und die zumindest eine Polyalkylenoxid-Gruppe an verschiedenen Silizium-Atomen des Polysiloxans angeordnet sind.

5. Verwendung eines Trennmittels zur Herstellung von Polyurethan-Formkörpern nach einem der vorangehenden Ansprüche, **dadurch gekennzeichnet, dass** die zumindest eine Polyalkylenoxid-Gruppe über eine weitere organische Gruppe an einem Silizium-Atom angebunden ist, wobei die weitere organische Gruppe bevorzugt eine Alkylengruppe ist.

6. Verwendung eines Trennmittels zur Herstellung von Polyurethan-Formkörpern nach einem der vorangehenden Ansprüche, **dadurch gekennzeichnet, dass** die weitere trennaktive Substanz ausgewählt ist aus flüssigen, festen, natürlichen und synthetischen Wachsen, optional behandelt, chemisch modifiziert oder verseift, Estern von Carbonsäuren mit Alkoholen oder Fettalkoholen, Metallseifen, Ölen oder sonstigen flüssigen Kohlenwasserstoffen oder Silikonen ohne zumindest eine Amino- oder Amidogruppe und zumindest eine Polyalkylenoxid-Gruppe.

7. Verwendung nach einem der Ansprüche 1 bis 6 als externes Trennmittel.

## Claims

1. Use of a separating agent for the manufacture of polyurethane moulded bodies, wherein the separating agent for the manufacture of polyurethane moulded bodies comprises:
i) At least one carrier medium selected from water and/or organic solvents,
ii) at least one polysiloxane, which comprises at least amino group or amido group and at least one polyalkylene oxide group,
iii) preferably at least one polysiloxane which is solid at room temperature, preferably selected from the group of silicone resins and/or silicone waxes, and
iv) at least one separation-active substance selected from the group of the waxes, polysiloxanes without amino group or amido group and polyalkylene oxide group, soaps and oils, preferably selected from the group of the reactive polysiloxanes without at least one amino group or amido group and at least one polyalkylene oxide group, reactive soaps or reactive oils.

2. Use of a separating agent for the manufacture of polyurethane moulded bodies according to claim 1, **characterized in that** the amino group or amido group are bonded by means of a organic group to a silicon atom, wherein the organic group preferably contains an alkylene group, alkylene oxide group, polyalkylene oxide group, epoxy-containing group, carboxy group, or combinations thereof.

3. Use of a separating agent for the manufacture of polyurethane moulded bodies according to claim 1 or 2, **characterized in that** the amino group comprises the formula N(R¹)(R²)(R³), wherein each R¹-R³ is selected independently of one another from H, C₁-C₂₀ alkyl, C₁-C₂₀ alkenyl, C₁-C₁₀ alkoxy and polyalkoxy, wherein, in particular, the alkyl or alkenyl residue can comprise preferably further functional groups, such as, for example, hydroxyl groups, keto groups, and/or carboxy groups, wherein secondary and tertiary amino groups are preferred.

4. Use of a separating agent for the manufacture of polyurethane moulded bodies according to one of the preceding claims, **characterized in that** the at least one amino group or amido group and the at least one polyalkylene oxide group are arranged at different silicon atoms of the polysiloxane.

5. Use of a separating agent for the manufacture of polyurethane moulded bodies according to one of the preceding claims, **characterized in that** the at least one polyalkylene oxide group is bonded by a further organic group to a silicon atom, wherein the further organic group is preferably an alkylene group.

6. Use of a separating agent for the manufacture of polyurethane moulded bodies according to one of the preceding claims, **characterized in that** the further separation-active substance is selected from liquid, solid, natural and synthetic waxes, optionally treated, chemically modified or saponified, esters of carboxylic acids with alcohols or fatty alcohols, metallic soaps, oils, or other fluid hydrocarbons or silicones without at least one amino group or amido group and at least one polyalkylene oxide group.

7. Use according to one of claims 1 to 6 as an external separating agent.

## Revendications

1. Utilisation d'un agent de séparation pour la fabrication de corps moulés en polyuréthane, l'agent de séparation pour la fabrication de corps moulés en polyuréthane comprenant :
i) au moins un milieu support sélectionné parmi de l'eau et/ou un solvant organique,
ii) au moins un polysiloxane possédant au moins un groupe amino ou amido et au moins un groupe oxyde de polyalkylène,
iii) préférentiellement au moins un polysiloxane, solide à température ambiante, préférentiellement sélectionné dans le groupe constitué de résines de silicone et/ou de cires de silicone, et
iv) au moins une substance active permettant une libération sélectionnée dans le groupe constitué de cires, de polysiloxanes ne comportant pas de groupe amino ou amido et dans le groupe constitué d'oxyde de polyalkylène, de savons et d'huiles, préférentiellement sélectionnée dans le groupe constitué de polysiloxanes réactives ne comportant pas de groupe amino ou amido et au moins dans un groupe constitué d'oxyde de polyalkylène, de savons réactifs ou d'huiles réactives.

2. Utilisation d'un agent de séparation pour la fabrication de corps moulés en polyuréthane selon la revendication 1, **caractérisé en ce que** le groupe amino ou amido est lié à un atome de silice par un groupe organique, le groupe organique contenant préférentiellement un groupe alkyle, un groupe oxyde d'alkyle, un groupe oxyde de polyalkylène, un groupe contenant de l'époxy, un groupe céto, un groupe carboxy ou des combinaisons y faisant appel.

3. Utilisation d'un agent de séparation pour la fabrication de corps moulés en polyuréthane selon la revendication 1 ou 2, **caractérisé en ce que** le groupe amino possède la formule N(R¹) (R²) (R³), chaque R¹- R³ étant indépendamment sélectionné parmi H, alkyle en C₁ à C₂₀, alcényle en C₁ à C₂₀, alcoxy et polyalcoxy en C₁ à C₁₀, notamment en particulier les résidus d'alkyle ou d'alcényle peuvent préférentiellement posséder des groupes fonctionnels supplémentaires, comme par exemple des groupes hydroxyle, des groupes céto et/ou des groupes carboxy, dans lesquels des groupes amino secondaires et tertiaires sont préférés.

4. Utilisation d'un agent de séparation pour la fabrication de corps moulés en polyuréthane selon l'une quelconque des revendications précédentes, **caractérisée en ce que** le au moins un groupe amino ou amido et le au moins un groupe oxyde de polyalkylène sont liés à différents atomes de silice du polysiloxane.

5. Utilisation d'un agent de séparation pour la fabrication de corps moulés en polyuréthane selon l'une quelconque des revendications précédentes, **caractérisée en ce qu'**au moins un groupe oxyde de polyalkylène est lié à un atome de silice par un groupe organique supplémentaire, le groupe organique supplémentaire étant préférentiellement un groupe alkylène.

6. Utilisation d'un agent de séparation pour la fabrication de corps moulés en polyuréthane selon l'une quelconque des revendications précédentes, **caractérisé en ce que** la substance active pour libération supplémentaire est sélectionnée parmi des cires liquides, solides, naturelles et synthétiques, éventuellement traitées, chimiquement modifiées ou saponifiées, des esters d'acides carboniques avec des alcools ou des alcools gras, des savons métalliques, des huiles ou d'autres hydrocarbures ou silicones liquides ne comportant pas au moins un groupe amino ou amido et au moins un groupe oxyde de polyalkylène.

7. Utilisation selon l'une quelconque des revendications 1 à 6 comme agent de séparation externe.
